(19) Europäisches Patentamt
European Patent Office
Office européen des brevets

(11) EP 0 517 881 B1

# (12) FASCICULE DE BREVET EUROPEEN

(45) Date de publication et mention de la délivrance du brevet:
**05.03.1997 Bulletin 1997/10**

(21) Numéro de dépôt: **92902152.5**

(22) Date de dépôt: **17.12.1991**

(51) Int Cl.[6]: **C08L 95/00**

(86) Numéro de dépôt international:
**PCT/FR91/01018**

**WO 92/11321 (09.07.1992 Gazette 1992/17)**

(54) **COMPOSANTE BITUME/POLYMERE PERMETTANT D'OBTENIR DES COMPOSITIONS BITUME/POLYMERE A TRES FAIBLE SUSCEPTIBILITE THERMIQUE UTILISABLES POUR LA REALISATION DE REVETEMENTS**

BITUMEN-POLYMER-KOMPONENTE FÜR DIE HERSTELLUNG VON BITUMEN-POLYMERE-ZUSAMMENSETZUNGEN MIT NIEDRIGER THERMISCHER SUSZEPTIBILITÄT

BITUMEN/POLYMER COMPONENT GIVING BITUMEN/POLYMER COMPOSITIONS WITH VERY LOW HEAT SENSITIVITY FOR USE IN SURFACING

(84) Etats contractants désignés:
**AT BE CH DE DK ES FR GB GR IT LI LU NL SE**

(30) Priorité: **18.12.1990 FR 9015788**
**18.12.1990 FR 9015789**

(43) Date de publication de la demande:
**16.12.1992 Bulletin 1992/51**

(73) Titulaire: **ELF ANTAR FRANCE**
**92400 Courbevoie (FR)**

(72) Inventeurs:
- **CHAVEROT, Pierre**
  **F-69600 Oullins (FR)**
- **LACOUR, Claude**
  **F-38200 Vienne (FR)**

(74) Mandataire: **Boillot, Marc**
**Elf Aquitaine Production,**
**Département Propriété Industrielle,**
**Tour Elf,**
**Cédex 45**
**92078 Paris La Défense (FR)**

(56) Documents cités:

| | |
|---|---|
| **EP-A- 0 360 656** | **EP-A- 0 467 790** |
| **WO-A-89/12079** | **FR-A- 2 078 893** |

Remarques:
Le dossier contient des informations techniques présentées postérieurement au dépôt de la demande et ne figurant pas dans le présent fascicule.

EP 0 517 881 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

L'invention concerne un procédé d'obtention d'une composante bitume/polymère utilisable pour former des compositions bitume/polymère à très faible susceptibilité thermique, qui sont applicables à la réalisation de revêtements.

Une des principales causes de destruction des chaussées réalisées en faisant appel à des enrobés préparés en utilisant des liants bitumineux, est la perte d'uni transversal par suite de la formation d'ornières dues à un fluage irréversible du liant bitumineux composant l'enrobé. Dans ce processus, les caractéristiques du liant bitumineux deviennent insuffisantes pour maintenir la cohésion de la construction et il s'ensuit une réduction, voire même une annulation, de la teneur en vide de la couche d'enrobés. Dans ces conditions le bitume agit plutôt comme un lubrifiant que comme un agent de cohésion. Pour remédier à cet inconvénient, qui présente de plus des dangers évidents au niveau de la sécurité des usagers de la route, on a proposé d'augmenter la dureté des liants bitumineux utilisés, c'est-à-dire de faire appel, comme liants bitumineux, à des bitumes de faible pénétration.

Un autre problème apparaît lorsque des fissurations importantes se produisent dans les chaussées lors des premiers jours de gel et surtout lorsque ce gel atteint les couches profondes de la chaussée. Le refroidissement des structures superficielles de la chaussée se faisant plus rapidement que le refroidissement des structures situées plus en profondeur, des contraintes de retrait thermique très importantes prennent naissance. La capacité d'un bitume à résister à de telles contraintes étant directement liée à sa capacité à relaxer ces contraintes, il importe que la matrice bitumineuse d'une chaussée réalisée à partir d'enrobés possède une concentration élevée en fractions huileuses. Ceci entraîne l'utilisation de bitumes mous de pénétration élevée pour constituer le liant bitumineux de l'enrobé. Le problème réside alors dans la capacité de ces bitumes à résister aux déformations permanentes.

Un liant bitumineux approprié pour la réalisation de chaussées doit donc posséder des propriétés qui forment le meilleur compromis possible entre deux tendances, à savoir résistance à la fragilité à froid, qui nécessite l'utilisation de bitumes mous de forte pénétration pour former le liant bitumineux, et résistance aux déformations permanentes, qui nécessite l'emploi de bitume de faible pénétration pour constituer le liant bitumineux.

Ces propriétés d'un liant bitumineux peuvent s'appréhender par la détermination de l'intervalle de plasticité, défini comme la différence entre la température de ramollissement bille et anneau (en abrégé TBA), révélatrice des propriétés à chaud du liant bitumineux, et le point de fragilité Fraass, révélateur des propriétés à froid dudit liant. Le liant bitumineux résistera d'autant mieux aux sollicitations à chaud et à froid que l'intervalle de plasticité est plus large.

Les grandeurs pénétration, température de ramollissement bille et anneau (TBA) et point de fragilité Fraass utilisées pour caractériser les liants bitumineux sont obtenues par des procédures normalisées comme indiqué ci-après :

- pénétration : déterminée selon la norme NF T 66004 et exprimée en 1/10 de mm ;
- température de ramollissement bille et anneau : déterminée selon la norme NF T 66008 et exprimée en °C ;
- point de fragilité Fraass : déterminé selon la norme IP 80/53 et exprimé en °C.

Les propriétés d'un liant bitumineux peuvent être également appréhendées par la détermination de la susceptibilité thermique dudit liant à partir des courbes de variation de caractéristiques du liant en fonction de la température, la susceptibilité thermique étant directement liée à la pente desdites courbes de variation.

On peut encore obtenir une indication de la susceptibilité thermique d'un liant bitumineux à partir d'une corrélation entre la pénétration (en abrégé pen) et la TBA du liant connue sous le nom d'indice de PFEIFFER (en abrégé PF).

Cet indice se calcule par la relation

$$PF = \frac{20 - 500\ A}{1 + 50\ A}$$

dans laquelle A est la pente de la droite représentée par l'équation

$$A = \frac{\log_{10} 800 - \log_{10} pen}{TBA - 25}$$

La susceptibilité thermique du liant bitumineux est d'autant plus faible que la valeur de l'indice de PFEIFFER est plus grande ou, ce qui revient au même, que la valeur de la grandeur A est plus faible.

Pour les bitumes classiques l'indice de PFEIFFER prend des valeurs se situant aux alentours de zéro. Les bitumes oxydés présentent des valeurs nettement plus élevées, comprises entre 3 et 7, d'indice de PFEIFFER, mais leur pénétration est inférieure à 50 et peut atteindre des valeurs aussi basses que zéro dans certains cas extrêmes, ce qui signifie que ces produits auront une résistance accrue aux déformations permanentes mais présenteront une très grande fragilité à froid.

Les liants bitumineux du type bitume/polymère, notamment du type bitume/élastomère ou encore du type bitume/plastomère, ont des valeurs d'indice de PFEIFFER supérieures à zéro et pouvant atteindre deux, ce qui représente un pas important pour l'amélioration des performances des chaussées soumises à des sollicitations de plus en plus sévères. Toutefois cette amélioration demeure encore insuffisante pour certaines zones particulièrement agressées par un trafic très lourd et dans des régions présentant des écarts de température très importants entre l'été et l'hiver.

La citation EP-A-0360656 propose un procédé de préparation de compositions bitume/polymère qui présentent, d'après les résultats des exemples, des indices de PFEIFFER inférieurs à 2. Dans ce procédé, on met en contact, entre 100°C et 230°C et sous agitation, un bitume avec, en poids du bitume, 0,5 % à 15 % d'un copolymère de styrène et d'un diène conjugué en présence d'un agent de couplage donneur de soufre propre à fournir 0,5 % à 10 % en poids de soufre par rapport au copolymère. Le bitume, utilisé dans les exemples, possède une viscosité cinématique égale à $1,7x10^{-4}$ $m^2/s$ à 160°C. Des procédés d'un type comparable sont encore décrits dans les citations WO-A-8912079 et FR-A-2078893.

L'invention a pour objet un procédé d'obtention d'une composante bitume/polymère consistant en une matrice hydrocarbonée, dans laquelle un élastomère réticulé au soufre est distribué de manière homogène en quantité propre à représenter 5% à 20% en poids de la composante bitume/polymère, et présentant un indice de PFEIFFER supérieur à 5 et de préférence au moins égal à 7, ledit indice étant défini, comme indiqué précédemment, à partir de la pénétration, déterminée selon la norme NF T 66004, et de la température de ramollissement bille et anneau, déterminée selon la norme NF T 66008.

Ledit procédé est du type dans lequel on met en contact, entre 100°C et 230°C, de préférence entre 120°C et 190°C, et sous agitation, une fraction hydrocarbonée, avec en poids de la fraction hydrocarbonée, 5 à 25% d'un élastomère réticulable au soufre, en présence d'un agent de couplage donneur de soufre propre à fournir 0,5 à 10%, plus particulièrement 1% à 8%, en poids de soufre par rapport à l'élastomère et il se caractérise en ce que l'on utilise une fraction hydrocarbonée présentant une viscosité cinématique à 100°C comprise entre $0,5x10^{-4}$ $m^2/s$ et $3x10^{-4}$ $m^2/s$, plus particulièrement allant de $1x10^{-4}$ $m^2/s$ à $2x10^{-4}$ $m^2/s$.

L'élastomère réticulable au soufre, que l'on utilise pour préparer la composante bitume/polymère et que l'on retrouve réticulé au soufre dans ladite composante, peut être tel que polyisoprène, polynorbornène, polybutadiène, caoutchouc butyle, terpolymère éthylène/propène/diène (EPDM).

Avantageusement ledit élastomère est choisi parmi les copolymères statistiques ou séquencés de styrène et d'un diène conjugué tel que butadiène, isoprène, chloroprène, butadiène carboxylé, isoprène carboxylé, et plus particulièrement consiste en un ou plusieurs copolymères choisis parmi les copolymères séquencés de styrène et de butadiène, de styrène et d'isoprène, de styrène et de chloroprène, de styrène et de butadiène carboxylé ou encore de styrène et d'isoprène carboxylé. Le copolymère de styrène et de diène conjugué, et en particulier chacun des copolymères précités, possède avantageusement une teneur pondérale en styrène allant de 5% à 50%. La masse moléculaire viscosimétrique moyenne du copolymère de styrène et de diène conjugué, et notamment celle des copolymères mentionnés ci-dessus, peut être comprise, par exemple, entre 10000 et 600000 et se situe de préférence entre 30000 et 400000.

De préférence, le copolymère de styrène et de diène conjugué est choisi parmi les copolymères di-ou triséquencés de styrène et de butadiène, de styrène et d'isoprène, de styrène et de butadiène carboxylé ou encore de styrène et d'isoprène carboxylé qui ont des teneurs en styrène et des masses moléculaires viscosimétriques situées dans les intervalles définis précédemment.

La fraction hydrocarbonée, utilisée dans la préparation de la composante bitume/polymère, peut être choisie parmi les diverses fractions hydrocarbonées, notamment coupes pétrolières ou encore mélanges de bitumes et de distillats sous vide, qui possèdent des viscosités cinématiques situées dans les intervalles définis précédemment.

La composante bitume/polymère peut être avantageusement formée en mélangeant tout d'abord la quantité choisie d'élastomère réticulable au soufre avec la fraction hydrocarbonée, en opérant sous agitation à une température comprise entre 100°C et 230°C et plus particulièrement entre 120°C et 190°C, pendant une durée suffisante, généralement de l'ordre de quelques dizaines de minutes à quelques heures et par exemple de l'ordre de 1 heure à 5 heures, pour obtenir un mélange homogène, puis en incorporant audit mélange l'agent de couplage donneur de soufre en quantité propre à fournir 0,5% à 10%, plus particulièrement 1% à 8%, en poids de soufre élémentaire ou/et radicalaire par rapport à l'élastomère utilisé et en maintenant le tout sous agitation à une température comprise entre 100°C et 230°C, plus particulièrement entre 120°C et 190°C, et identique ou non à la température de mélange de l'élastomère avec la fraction hydrocarbonée, pendant une durée suffisante, par exemple quelques dizaines de minutes à quelques heures et notamment entre 30 minutes et 5 heures, pour former un produit de réaction constituant la composante bitume/polymère.

L'agent de couplage donneur de soufre, que l'on utilise dans la préparation de la composante bitume/polymère, peut consister en un produit choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre. En particulier, l'agent de couplage donneur de soufre est choisi parmi les produits M, qui renferment, en poids, de 0% à 100% d'une composante A consistant en un ou plusieurs

accélérateurs de vulcanisation donneurs de soufre et de 100% à 0% d'une composante B consistant en un ou plusieurs agents de vulcanisation choisis parmi le soufre élémentaire et les polysulfures d'hydrocarbyle, et les produits N, qui renferment une composante C consistant en un ou plusieurs accélérateurs de vulcanisation non donneurs de soufre et un produit M dans un rapport pondéral de la composante C au produit M allant de 0,01 à 1 et de préférence de 0,05 à 0,5.

Le soufre élémentaire susceptible d'être utilisé pour constituer, en partie ou en totalité, l'agent de couplage donneur de soufre est avantageusement du soufre en fleur et de préférence du soufre cristallisé sous la forme orthorhombique et connu sous le nom de soufre alpha.

Les polysulfures d'hydrocarbyle susceptibles d'être utilisés pour former au moins une partie de l'agent de couplage donneur de soufre répondent à la formule générale

$$R_7 - (S)_v - [R_9 - (S)_v]_w - R_8$$

dans laquelle $R_7$ et $R_8$ désignent chacun un radical hydrocarboné monovalent, saturé ou insaturé, en $C_1$ à $C_{20}$ ou sont reliés entre eux pour constituer un radical hydrocarboné divalent en $C_2$ à $C_{20}$, saturé ou insaturé, formant un cycle avec les autres groupements d'atomes associés dans la formule, $R_9$ est un radical hydrocarboné divalent, saturé ou insaturé, en $C_1$ à $C_{20}$, les $-(S)_v-$ représentent des groupements divalents formés chacun de v atomes de soufre, les v pouvant être différents de l'un desdits groupements à l'autre et désignant des nombres entiers allant de 1 à 6 avec au moins l'un des v égal ou supérieur à 2, et w représente un nombre entier prenant les valeurs de zéro à 10.

Dans la formule précitée, les radicaux hydrocarbonés monovalents $R_7$ et $R_8$ en $C_1$ à $C_{20}$ ainsi que le radical hydrocarboné divalent $R_9$ en $C_1$ à $C_{20}$ sont choisis notamment parmi les radicaux aliphatiques, alicycliques ou aromatiques. Lorsque les radicaux $R_7$ et $R_8$ sont reliés entre eux pour constituer un radical hydrocarboné divalent en $C_1$ à $C_{20}$ formant un cycle avec les autres groupements d'atomes associés dans la formule, ledit radical divalent est similaire au radical $R_9$ et peut être également du type aliphatique, alicyclique ou aromatique. En particulier les radicaux $R_7$ et $R_8$ sont identiques et choisis parmi les radicaux alcoyles en $C_1$ à $C_{20}$, par exemple éthyle, propyle, hexyle, octyle, nonyle, décyle, dodécyle linéaire, tertiododécyle, hexadécyle, octadécyle et les radicaux cycloalcoyles et aryles en $C_6$ à $C_{20}$, notamment benzyle, phényle, tolyle, cyclohexyle, tandis que le radical $R_9$ ou le radical divalent formé par la réunion de $R_7$ et $R_8$ sont choisis parmi les radicaux alcoylènes en $C_1$ à $C_{20}$ ou les radicaux cycloalcoylènes ou arylènes, notamment phénylène, tolylène, cyclohexylène, en $C_6$ à $C_{20}$.

Des polysulfures utilisables suivant l'invention sont en particulier ceux définis par la formule $R_7-(S)_u-R_8$ dans laquelle $R_7$ et $R_8$ désignent chacun un radical hydrocarboné monovalent, saturé ou insaturé, en $C_1$ à $C_{20}$ ou sont reliés entre eux pour former un radical divalent $R_9$ en $C_1$ à $C_{20}$, $R_7$, $R_8$ et $R_9$ ayant les significations précédentes, $-(S)_u-$ représente un groupement divalent formé par un enchaînement de u atomes de soufre, u étant un nombre entier allant de 2 à 6.

Des polysulfures préférés répondent à la formule générale $R_{10}-(S)_t-R_{10}$ dans laquelle $R_{10}$ désigne un radical alcoyle en $C_6$ à $C_{16}$, et $-(S)_t-$ représente un groupement divalent formé par un enchaînement de t atomes de soufre, t étant un nombre entier allant de 2 à 5. Des exemples de tels polysulfures sont notamment disulfure de dihexyle, disulfure de dioctyle, disulfure de didodécyle, disulfure de ditertiododécyle, disulfure de dihexadécyle, trisulfure de dihexyle, trisulfure de dioctyle, trisulfure de dinonyle, trisulfure de ditertiododécyle, trisulfure de dihexadécyle, tétrasulfure de dihexyle, tétrasulfure de dioctyle, tétrasulfure de dinonyle, tétrasulfure de ditertio-dodécyle, tétrasulfure de dihexadécyle, pentasulfure de dihexyle, pentasulfure de dioctyle, pentasulfure de dinonyle, pentasulfure de ditertiododécyle, pentasulfure de dihexa-décyle.

D'autres polysulfures, qui peuvent être utilisés suivant l'invention, sont par exemple tels que trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.

Les accélérateurs de vulcanisation donneurs de soufre peuvent être choisis, en particulier, parmi les polysulfures de thiurame de formule générale

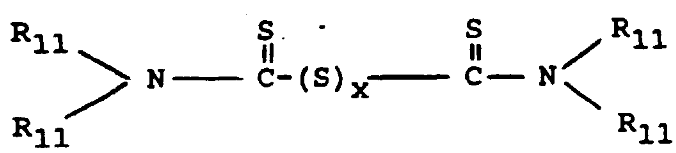

dans laquelle les $R_{11}$, identiques ou différents, représentent chacun un radical hydrocarboné en $C_1$ à $C_{12}$ et de préférence en $C_1$ à $C_8$, notamment un radical alcoyle, cycloalcoyle ou aryle, ou bien deux radicaux $R_{11}$ fixés à un même atome d'azote sont reliés entre eux pour former un radical divalent hydrocarboné en $C_2$ à $C_8$ et x est un nombre

allant de 2 à 8. Comme exemples de tels accélérateurs de vulcanisation on peut citer notamment les composés disulfure de dipentaméthylène thiurame, tétrasulfure de dipentaméthylène thiurame, hexasulfure de dipentaméthylène thiurame, disulfure de tétrabutylthiurame, disulfure de tétraéthylthiurame et disulfure de tétraméthylthiurame.

Comme autres exemples d'accélérateurs de vulcanisation donneurs de soufre ont peut encore citer les disulfures d'alcoylphénols et les disulfures tels que disulfure de morpholine et N,N'-disulfure de caprolactame.

Les accélérateurs de vulcanisation non donneurs de soufre peuvent être des composés soufrés choisis notamment parmi le mercaptobenzothiazole et ses dérivés, les dithiocarbamates de formule générale (I)

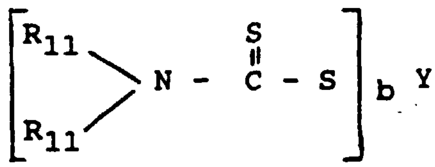
(I)

dans laquelle les $R_{11}$, identiques ou différents, ont la signification donnée plus haut, Y représente un métal et b désigne la valence de Y, et les monosulfures de thiurame de formule générale (II)

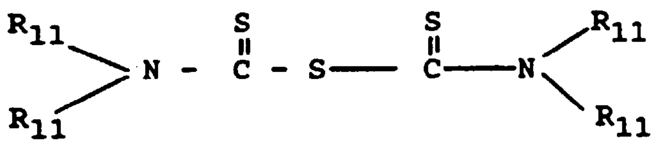
(II)

dans laquelle les $R_{11}$, identiques ou différents, ont la signification donnée plus haut.

Des exemples d'accélérateurs de vulcanisation du type des mercaptobenzothiazoles peuvent être tels que mercaptobenzothiazole, benzothiazole thiolate de zinc, benzothiazole thiolate de sodium, disulfure de benzothiazyle, benzothiazole thiolate de cuivre, N,N'-diéthylthiocarbamyle sulfure de benzothiazyle et les benzothiazolesulfénamides telles que 2-benzothiazolediéthylsulfénamide, 2-benzothiazolepentaméthylènesulfénamide, 2-benzothiazolecyclohexylsul-fénamide, N-oxydiéthylène 2-benzothiazolesulfénamide, N-oxydiéthyléne 2-benzothiazolethiosulfénamide, 2-benzothiazoledicyclohexylsulfénamide, 2-benzothiazolediisopropylsul-fénamide, 2-benzothiazoletertiobutylsulfénamide, N-oxydiéthylénethiocarbamyl N'-oxydiéthylènesulfénamide.

Parmi les accélérateurs de vulcanisation du type des dithiocarbamates de formule générale (I), on peut citer en particulier les composés diméthyldithiocarbamate de bismuth, diamyldithiocarbamate de cadmium, diéthyldithiocarbamate de cadmium, diméthyldithiocarbamate de cuivre, dibutyldithiocar-bamate de zinc, diamyldithiocarbamate de plomb, diméthyldithiocarbamate de plomb, pentaméthylénedithiocarbamate de plomb, diméthyldithiocarbamate de sélénium, diéthyldithiocarbamate de tellure, diamyldithiocarbamate de zinc, dibenzyldithiocarbamate de zinc, diéthyldithiocarbamate de zinc, diméthyldithiocarbamate de zinc et pentaméthylènedithiocarbamate de zinc.

A titre d'exemples de monosulfures de thiurame répondant à la formule (II), on peut citer les composés tels que monosulfure de dipentaméthylènethiurame, monosulfure de tétrabutylthiurame, monosulfure de tétraéthylthiurame et monosulfure de tétraméthylthiurame.

D'autres accélérateurs de vulcanisation non donneurs de soufre, qui n'appartiennent pas aux familles définies plus haut, peuvent être également utilisés. De tels accélérateurs de vulcanisation peuvent être tels que diphényl-1,3 guanidine, diorthotolylguanidine et oxyde de zinc, çe dernier composé pouvant être employé éventuellement en présence d'acides gras du type acide stéarique, acide éthylcaproique, acide laurique.

Avantageusement les accélérateurs de vulcanisation donneurs de soufre utilisables selon l'invention sont tels que disulfure de tétraméthylthiurame, disulfure de tétraéthylthiurame et tétrasulfure de dipentaméthylènethiurame et les accélérateurs de vulcanisation non donneurs de soufre sont tels que 2-mercaptobenzothiazole, disulfure de dibenzothiazyle, benzothiazolethiolate de zinc, 2-benzothiazolecyclohexylsulfénamide, N-oxydiéthyléne 2-benzothiazolesulfénamide, 2-benzothiazolediisopropylsulfénamide, 2-benzothiazole-dicyclohexylsulfénamide, diméthyldithiocarbamate de zinc, diéthyldithiocarbamate de zinc, dibutyldithiocarbamate de zinc, monosulfure de tétraméthylthiurame, diorthotolylgua-nidine, disulfure de morpholine et oxyde de zinc.

De par sa composition, comme indiqué plus haut, l'agent de couplage donneur de soufre peut être du type monocomposante ou du type multicomposante, l'agent de couplage du type multicomposante pouvant être formé préalablement à son utilisation ou encore produit in situ dans le milieu dans lequel il doit être présent. L'agent de couplage donneur de soufre du type multicomposante préformé ou du type monocomposante ou les composantes de l'agent de

couplage donneur de soufre du type multicomposante formé in situ peuvent être mis en oeuvre.tels quels, par exemple à l'état fondu, ou bien en mélange, par exemple en solution ou en suspension, avec un diluant, qui peut être notamment un composé hydrocarboné et en particulier une partie de la fraction hydrocarbonée utilisée pour préparer la composante bitume/polymère, ledit diluant représentant avantageusement 5 à 45% du poids de l'ensemble formé par l'agent de couplage et le diluant.

La composante bitume/polymère peut encore renfermer des additifs divers et notamment des composés azotés du type des amines ou amides à titre de promoteurs d'adhésion du liant bitume/polymère final aux surfaces minérales, lesdits composés azotés étant de préférence greffés sur la composante bitume/polymère.

La composante bitume/polymère obtenue par le procédé selon l'invention, dont la caractéristique principale est de présenter un indice de PFEIFFER supérieur à 5 et plus particulièrement au moins égal à 7 et dont une caractéristique avantageuse est de posséder une pénétration comprise entre 80 et 500, est utilisable pour former des compositions bitume/polymère présentant une très faible susceptibilité thermique, qui sont constituées, en poids, de 20 % à 100 % de la composante bitume/polymère et de 80 % à 0 % d'un bitume présentant une pénétration comprise entre 10 et 100 et plus particulièrement entre 20 et 60, ledit bitume étant par exemple un bitume de distillation directe ou de distillation réduite ou encore un bitume soufflé ou semi-soufflé et qui sont applicables, directement ou après mise en émulsion aqueuse, à la réalisation de revêtements et notamment de revêtements routiers du type enduits superficiels, à la production d'enrobés mis en place à chaud ou à froid, ou encore à la réalisation de revêtements d'étanchéité.

Le mélange de la composante bitume/polymère avec le bitume peut être réalisé soit directement à la suite de l'obtention de ladite composante, lorsqu'une utilisation quasi immédiate de la composition bitume/polymère est requise, ou bien encore après une durée de stockage plus ou moins prolongée de la composante bitume/polymère, lorsqu'une utilisation différée de la composition bitume/polymère est envisagée.

La composante bitume/polymère selon l'invention, peut être avantageusement utilisée pour produire une composition bitume/polymère, qui consiste en une matrice bitumineuse, dans laquelle un élastomère réticulé au soufre est distribué de façon homogène en quantité représentant 0,5% à 15% en poids de la composition, et qui possède une pénétration, déterminée selon la norme NF T 66004, comprise entre 80 et 400 et de préférence allant de 100 à 400, une température de ramollissement bille et anneau, déterminée selon la norme NF T 66008, supérieure à 55°C et de préférence comprise entre 60°C et 120°C, et un indice de PFEIFFER supérieur à 5 et de préférence au moins égal à 7, par mélange de ladite composante bitume/polymère, de teneur en élastomère réticulé supérieure à celle de la composition bitume/polymère à produire, avec une quantité appropriée d'un bitume ayant une pénétration comprise entre 10 et 100, plus particulièrement entre 20 et 60, en opérant entre 100°C et 230°C et sous agitation, ladite composition étant applicable, comme indiqué ci-dessus, directement ou après mise en émulsion aqueuse, à la réalisation de revêtements routiers, d'enrobés, mis en place à chaud ou à froid, ou encore de revêtements d'étanchéité.

Avantageusement le point de FRAASS de ladite composition bitume/polymère, déterminé selon la norme IP 80/53, est inférieur à -20°C et de préférence inférieur à - 25°C et la contrainte à 900% d'élongation de cette composition, déterminée à partir d'essais de traction réalisés selon la norme NF T 46002 avec une vitesse de 500mm/minute, est comprise entre 0,25 bar et 3 bars à 20°C et entre 2 bars et 20 bars à 5°C.

En particulier, la préparation de la composante bitume/polymère ainsi que la production de la composition bitume/polymère par mélange de la composante bitume/polymère et du bitume ayant une pénétration comprise entre 10 et 100 sont réalisées à des températures identiques ou différentes comprises entre 120°C et 190°C.

De préférence, la quantité de bitume ayant une pénétration comprise entre 10 et 100, que l'on mélange à la composante bitume/polymère pour former la composition bitume/polymère, est telle que la dite composition renferme, en poids, 0,5% à 7% d'élastomère réticulé au soufre.

L'élastomère réticulé au soufre présent dans la composition bitume/polymère est tel que défini précédemment. Avantageusement ledit élastomère est choisi parmi les copolymères de styrène et d'un diène conjugué tel que butadiène, isoprène, chloroprène, butadiène carboxylé, isoprène carboxylé. Le copolymère de styrène et de diène conjugué possède avantageusement une teneur pondérale en styrène allant de 5% à 50%.

L'invention est illustrée par les exemples suivants donnés à titre non limitatif.

Dans ces exemples, les quantités et pourcentages sont exprimés en poids sauf indication contraire.

**EXEMPLE 1 :**

En opérant à 170°C et sous agitation, on mélangeait 907,3 parties d'une fraction hydrocarbonée, consistant en une coupe pétrolière ayant une viscosité cinématique à 100°C égale à 1,1 x $10^{-4}$ $m^2/s$, avec 90 parties d'un copolymère diséquencé de styrène et de butadiène possédant une masse moléculaire viscosimétrique moyenne égale à 90000 environ et renfermant 23% de styrène. Après 3 heures de mélangeage, on ajoutait à la masse homogène ainsi obtenue 2,7 parties d'un agent de couplage donneur de soufre consistant en soufre cristallisé et maintenait le tout sous agitation à la température de 170°C pendant encore 2 heures.

Le produit de réaction obtenu comme indiqué ci-dessus, qui constitue la composante bitume/polymère, présentait

les caractéristiques suivantes :

- pénétration : 300
- TBA : 65°C
- Indice de PFEIFFER : + 9,6

**EXEMPLE 2 :**

En opérant à 170°C et sous agitation, on mélangeait 921,8 parties d'une fraction hydrocarbonée, consistant en une coupe pétrolière ayant une viscosité cinématique à 100°C égale à $1,2x10^{-4}$ $m^2/s$, avec 75 parties du copolymère utilisé dans l'exemple 1. Après 3 heures de mélangeage, on ajoutait à la masse homogène ainsi obtenue 3,2 parties d'un agent de couplage donneur de soufre formé de 2,55 parties de soufre cristallisé et de 0,65 partie de disulfure de tétraméthylthiurame et maintenait le tout sous agitation à la température de 170°C pendant encore 2 heures.

Le produit de réaction obtenu comme indiqué ci-dessus, qui constitue la composante bitume/polymère, présentait les caractéristiques suivantes :

- pénétration : 265
- TBA : 66°C
- Indice de PFEIFFER : + 8,9

A partir de la composante bitume/polymère ci-dessus, on préparait deux compositions bitume/polymère par mélange de ladite composante, à 170°C sous agitation pendant 30 minutes, avec un bitume de distillation directe ayant une pénétration dans l'intervalle 40-50, dans un rapport pondéral de la composante bitume/polymère au bitume égal à 1:1 pour l'une des compositions bitume/polymère (composition A) et à 3:1 pour l'autre (composition B).

Les compositions bitume/polymère obtenues présentaient les caractéristiques suivantes :

| | **Composition A** | **Composition B** |
|---|---|---|
| **. pénétration** | 210 | 270 |
| **. TBA** | 63°C | 64°C |
| **. Indice de PFEIFFER** | + 7 | + 8,7 |
| **. Point de FRAAS** | - 27°C | - 29°C |
| **. Contrainte à 900 % d'élongation (Vitesse 500mm/minute** | | |
| **- à 5°C** | 2,9 bars | 2,7 bars |
| **- à 20°C** | 0,51 bar | 0,45 bar |

**Revendications**

1. Procédé d'obtention d'une composante bitume/polymère consistant en une matrice hydrocarbonée, dans laquelle un élastomère réticulé au soufre est distribué de manière homogène en quantité propre à représenter 5 % à 20 % en poids de la composante bitume/polymère, et présentant un indice de PFEIFFER (PF) supérieur à 5, ledit indice étant défini par les relations

$$PF=\frac{20-500A}{1+50A} \text{ et } A=\frac{\log_{10} 800-\log_{10} pen}{TBA-25},$$

où les symboles "pen" et "TBA" désignent respectivement la pénétration, déterminée selon la norme NF T 66004, et le point de ramollissement bille et anneau, déterminé selon la norme NF T 66008, lequel procédé est du type dans lequel on met en contact, entre 100°C et 230°C et sous agitation, une fraction hydrocarbonée avec, en poids de la fraction hydrocarbonée, 5 % à 25 % d'un élastomère réticulable au soufre, en présence d'un agent de couplage donneur de soufre en quantité propre à fournir 0,5 % à 10 % en poids de soufre par rapport à l'élastomère et il se caractérise en ce que l'on utilise une fraction hydrocarbonée présentant une viscosité cinématique à 100°C comprise entre $0,5x10^{-4}$ $m^2/s$ et $3 \times 10^{-4}$ $m^2/s$.

2. Procédé selon la revendication 1, caractérisé en ce que la mise en contact de la fraction hydrocarbonée avec l'élastomère réticulable au soufre, en présence de l'agent de couplage donneur de soufre, est réalisée à une température comprise entre 120°C et 190°C.

3. Procédé selon la revendication 1 ou 2, caractérisé en ce que la fraction hydrocarbonée possède une viscosité cinématique à 100°C allant de $1x10^{-4}$ $m^2/s$ à $2x10^{-4}$ $m^2/s$.

4. Procédé selon l'une des revendications 1 à 3, caractérisé en ce que l'élastomère réticulable au soufre est un copolymère de styrène et d'un diène conjugué choisi parmi butadiène, isoprène, chloroprène, butadiène carboxylé et isoprène carboxylé.

5. Procédé selon la revendication 4, caractérisé en ce que le copolymère de styrène et d'un diène conjugué possède une masse moléculaire moyenne viscosimétrique comprise entre 10000 et 600000.

6. Procédé selon la revendication 5, caractérisé en ce que ladite masse moléculaire moyenne viscosimétrique est comprise entre 30000 et 400000.

7. Procédé selon l'une des revendications 4 à 7, caractérisé en ce que le copolymère de styrène et d'un diène conjugué renferme, en poids, 5 % à 50 % de styrène.

8. Procédé selon l'une des revendications 1 à 7, caractérisé en ce que l'agent de couplage donneur de soufre consiste en un produit choisi parmi le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

9. Procédé selon l'une des revendications 1 à 8, caractérisé en ce que l'on utilise une quantité d'agent de couplage donneur de soufre propre à fournir 1 % à 8 % en poids de soufre par rapport à l'élastomère réticulable au soufre.

10. Procédé selon l'une des revendications 1 à 9, caractérisé en ce que l'on opère en mélangeant tout d'abord la quantité choisie d'élastomère réticulable au soufre avec la fraction hydrocarbonée, en opérant sous agitation à une température comprise entre 100°C et 230°C, pendant une durée allant de 1 heure à 5 heures, pour obtenir un mélange homogène, puis en incorporant l'agent de couplage donneur de soufre audit mélange et en maintenant le tout sous agitation à une température comprise entre 100°C et 230°C, et identique ou non à la température de mélange de l'élastomère avec la fraction hydrocarbonée, pendant une durée comprise entre 30 minutes et 5 heures.

11. Utilisation d'une composante bitume/polymère selon l'une des revendications 1 à 10, à la production de compositions bitume/polymère, à faible susceptibilité thermique, qui sont constituée, en poids, de 20 % à 100 % de la composante bitume/polymère et de 80 % à 0 % d'un bitume présentant une pénétration comprise entre 10 et 100 et qui sont applicables directement ou après mise en émulsion aqueuse à la réalisation de revêtements routiers, à la production d'enrobés mis en place à chaud ou à froid ou encore à la réalisation de revêtements d'étanchéité.

12. Utilisation selon la revendication 11, caractérisée en ce que le bitume associé à la composante bitume/polymère présente une pénétration comprise entre 20 et 60.

13. Utilisation d'une composante bitume/polymère selon l'une des revendications 1 à 10 à la production d'une composition bitume/polymère, qui consiste en une matrice bitumineuse, dans laquelle un élastomère réticulé au soufre est distribué de façon homogène en quantité représentant 0,5 % à 15 % en poids de la composition, et qui possède une pénétration, déterminée selon la norme NFT66004, comprise entre 80 et 400, une température de ramollissement bille et anneau, déterminée selon la norme NFT66008, supérieure à 55°C et un indice de PFEIFFER supérieur à 5, par mélange de ladite composante bitume/polymère, de teneur en élastomère réticulé supérieure à celle de la composition bitume/polymère à produire, avec une quantité appropriée d'un bitume ayant une pénétration comprise entre 10 et 100, en opérant entre 100°C et 230°C et sous agitation, ladite composition bitume/polymère étant applicable directement ou après mise en émulsion aqueuse, à la réalisation de revêtements routiers, d'enrobés, mis en place à chaud ou à froid, ou encore de revêtements d'étanchéité.

14. Utilisation selon la revendication 13, caractérisée en ce que la quantité de bitume ayant une pénétration comprise entre 10 et 100, que l'on mélange à la composante bitume/polymère pour former la composition bitume/polymère,

est telle que ladite composition bitume/polymère renferme, en poids, 0,5 % à 7 % d'élastomère réticulé au soufre.

**15.** Utilisation selon la revendication 13 ou 14, caractérisée en ce que le bitume mélangé à la composante bitume/polymère a une pénétration comprise entre 20 et 60.

**16.** Utilisation selon l'une des revendications 13 à 15, caractérisée en ce que la composition bitume/polymère présente un indice de PFEIFFER au moins égal à 7.

**17.** Utilisation selon l'une des revendications 13 à 16, caractérisée en ce que la composition bitume/polymère présente une température de ramollissement bille et anneau comprise entre 60°C et 120°C.

**18.** Utilisation selon l'une des revendications 13 à 17, caractérisée en ce que la composition bitume/polymère présente un point de FRAASS, déterminé selon la norme IP 80/53, inférieur à -20°C.

**19.** Utilisation selon l'une des revendications 13 à 18, caractérisée en ce que la composition bitume/polymère présente une contrainte à 900 % d'élongation, déterminée à partir d'essais de traction réalisés selon la norme NF T 46002 avec une vitesse de 500 mm/minute, comprise entre 0,25 bar et 3 bars à 20°C et entre 2 bars et 20 bars à 5°C.

**20.** Utilisation selon l'une des revendications 13 à 19, caractérisée en ce que l'élastomère réticulé est un copolymère réticulé au soufre de styrène et d'un diène conjugué choisi parmi butadiène, isoprène, chloroprène, butadiène carboxylé et isoprène carboxylé, ledit copolymère réticulé renfermant, en poids, 5 % à 50 % de styrène.

**Patentansprüche**

**1.** Verfahren zur Gewinnung einer in einer Kohlenwasserstoffmatrix bestehenden Bitumen-Polymer-Komponente, in der ein mit Schwefel vernetztes Elastomer homogen in einer geeigneten Menge von 5 bis 20 %, bezogen auf das Gewicht der Bitumen-Polymer-Komponente, verteilt ist, und die einen Pfeiffer-Index (PF) von über 5 aufweist, der durch die Beziehungen

$$PF=\frac{20-500A}{1+50A} \text{ und } A=\frac{\log_{10} 800-\log_{10} pen}{TBA-25}$$

definiert ist, wobei das Symbol "pen" die nach der Norm NF T 66004 definierte Penetration und das Symbol "TBA" den nach der Norm NF T 66008 definierten, durch den Kugel-Ring-Versuch ermittelten Erweichungspunkt bedeuten, wobei das Verfahren so durchgeführt wird, daß man bei einer Temperatur zwischen 100°C und 230°C und unter Rühren eine Kohlenwasserstofffraktion mit 5 bis 25 %, bezogen auf das Gewicht der Kohlenwasserstofffraktion, eines mit Schwefel vernetzbaren Elastomers in Anwesenheit eines schwefelspendenden Haftmittels in einer Menge in Berührung bringt, die geeignet ist, 0,5 bis 10 Gew.-% Schwefel, bezogen auf das Elastomer, zu liefern, dadurch **gekennzeichnet**, daß man eine Kohlenwasserstofffraktion verwendet, die bei 100°C eine kinematische Viskosität zwischen $0{,}5 \times 10^{-4}$ $m^2/s$ und $3 \times 10^{-4}$ $m^2/s$ aufweist.

**2.** Verfahren nach Anspruch 1, dadurch **gekennzeichnet**, daß die Kontaktierung der Kohlenwasserstofffraktion mit dem mit Schwefel vernetzbaren Elastomer in Anwesenheit des schwefelspendenden Haftmittels bei einer Temperatur zwischen 120°C und 190°C durchgeführt wird.

**3.** Verfahren nach Anspruch 1 oder 2, dadurch **gekennzeichnet**, daß die Kohlenwasserstofffraktion bei 100°C eine kinematische Viskosität zwischen $1 \times 10^{-4}$ $m^2/s$ und $2 \times 10^{-4}$ $m^2/s$ aufweist.

**4.** Verfahren nach einem der Ansprüche 1 bis 3, dadurch **gekennzeichnet**, daß das mit Schwefel vernetzbare Elastomer ein Copolymer aus Styrol und einem konjugierten Dien, ausgewählt unter Butadien, Isopren, Chloropren, carboxyliertem Butadien und carboxyliertem Isopren ist.

**5.** Verfahren nach Anspruch 4, dadurch **gekennzeichnet**, daß das Copolymer aus Styrol und einem konjugierten Dien eine viskosimetrische Durchschnittsmolekularmasse von 10.000 bis 600.000 aufweist.

**6.** Verfahren nach Anspruch 5, dadurch **gekennzeichnet**, daß die viskosimetrische Durchschnittsmolekularmasse

zwischen 30.000 und 400.000 liegt.

7. Verfahren nach einem der Ansprüche 4 bis 6, dadurch **gekennzeichnet**, daß das Copolymer aus Styrol und einem konjugierten Dien 5 bis 50 Gew.-% Styrol enthält.

8. Verfahren nach einem der Ansprüche 1 bis 7, dadurch **gekennzeichnet**, daß das schwefelspendende Haftmittel in einem Produkt besteht, ausgewählt unter elementarem Schwefel, Kohlenwasserstoffpolysulfiden, schwefelspendenden Vulkanisationsbeschleunigern, Gemischen dieser Produkte untereinander und/oder mit nichtschwefelspendenden Vulkanisationsbeschleunigern.

9. Verfahren nach einem der Ansprüche 1 bis 8, dadurch **gekennzeichnet**, daß man ein Menge an schwefelspendendem Haftmittel verwendet, die geeignet ist, 1 bis 8 Gew.-% Schwefel, bezogen auf das mit Schwefel vernetzbare Elastomer, zu liefern.

10. Verfahren nach einem der Ansprüche 1 bis 9, dadurch **gekennzeichnet**, daß man zuerst die ausgewählte Menge an mit Schwefel vernetzbarem Elastomer mit der Kohlenwasserstofffraktion unter Rühren bei einer Temperatur zwischen 100°C und 230°C während einer Zeitdauer von 1 bis 5 Stunden mischt, um ein homogenes Gemisch zu erhalten, danach das schwefelspendende Haftmittel dem Gemisch zusetzt und das Ganze unter Rühren bei einer Temperatur zwischen 100°C und 230°C, die gegebenenfalls mit der Temperatur für das Mischen des Elastomers mit der Kohlenwasserstofffraktion zusammenfällt, während einer Zeitdauer zwischen 30 Minuten und 5 Stunden hält.

11. Verwendung einer Bitumen-Polymer-Komponente nach einem der Ansprüche 1 bis 10 zur Herstellung von Bitumen-Polymer-Gemischen mit geringer Hitzeempfindlichkeit, die aus 20 bis 100 Gew.- % der Bitumen-Polymer-Komponente und 80 bis 0 Gew.- % eines Bitumens mit einer Penetrationszahl zwischen 10 und 100 zusammengesetzt sind und unmittelbar oder nach Emulgierung in Wasser zur Herstellung von Straßenbelägen, von im warmen oder kalten Zustand aufgebrachten Straßendecken sowie zur Herstellung von Dichtungsschürzen verwendet werden können.

12. Verwendung nach Anspruch 11, dadurch **gekennzeichnet**, daß das Bitumen, mit dem die Bitumen-Polymer-Komponente verbunden ist, eine Penetrationszahl zwischen 20 und 60 aufweist.

13. Verwendung einer Bitumen-Polymer-Komponente nach einem der Ansprüche 1 bis 10 zur Herstellung eines Bitumen-Polymer-Gemisches, das aus einer bituminösen Matrix besteht, in der ein mit Schwefel vernetztes Elastomer homogen in einer Menge von 0,5 bis 15 %, bezogen auf das Gewicht des Gemisches, verteilt ist, und eine nach der Norm NFT 66004 definierte Penetrationszahl zwischen 80 und 400, einen nach der Norm NFT 66008 definierten, durch den Kugel-Ring-Versuch ermittelten Erweichungspunkt von über 55°C und einen Pfeiffer-Index (PF) von über 5 aufweist, durch Mischen der Bitumen-Polymer-Komponente bei einem Gehalt an vernetztem Elastomer, der über demjenigen des herzustellenden Bitumen-Polymer-Gemisches liegt, mit einer geeigneten Menge eines Bitumens mit einer Penetrationszahl zwischen 10 und 100 bei 100°C bis 230°C und unter Rühren, wobei das Bitumen-Polymer-Gemisch unmittelbar oder nach Emulgierung in Wasser zur Herstellung von Straßenbelägen, von im warmen oder kalten Zustand aufgebrachten Straßendecken sowie zur Herstellung von Dichtungsschürzen verwendet werden kann.

14. Verwendung nach Anspruch 13, dadurch **gekennzeichnet**, daß die Menge an Bitumen mit einer Penetrationszahl zwischen 10 und 100, die man mit der Bitumen-Polymer-Komponente mischt, um das Bitumen-Polymer-Gemisch zu bilden, so gewählt wird, daß das Bitumen-Polymer-Gemisch 0,5 bis 7 Gew.-% an mit Schwefel vernetztem Elastomer enthält.

15. Verwendung nach Anspruch 13 oder 14, dadurch **gekennzeichnet**, daß das mit der Bitumen-Polymer-Komponente gemischte Bitumen eine Penetrationszahl zwischen 20 und 60 aufweist.

16. Verwendung nach einem der Ansprüche 13 bis 15, dadurch **gekennzeichnet**, daß das Bitumen-Polymer-Gemisch einen Pfeiffer-Index von wenigstens 7 aufweist.

17. Verwendung nach einem der Ansprüche 13 bis 16, dadurch **gekennzeichnet**, daß das Bitumen-Polymer-Gemisch einen durch den Kugel-Ring-Versuch ermittelten Erweichungspunkt zwischen 60°C und 120°C aufweist.

**18.** Verwendung nach einem der Ansprüche 13 bis 17, dadurch **gekennzeichnet**, daß das Bitumen-Polymer-Gemisch einen Fraaß-Punkt, ermittelt nach der Norm IP 80/53, von unter -20°C aufweist.

**19.** Verwendung nach einem der Ansprüche 13 bis 18, dadurch **gekennzeichnet,** daß das Bitumen-Polymer-Gemisch eine durch gemäß der Norm NF T 46002 bei einer Geschwindigkeit von 500 mm/min durchgeführte Zugversuche ermittelte Spannung bei 900 % Dehnung von 0,25 bis 3 bar bei 20°C und 2 bis 20 bar bei 5°C aufweist.

**20.** Verwendung nach einem der Ansprüche 13 bis 19, dadurch **gekennzeichnet**, daß das vernetzte Elastomer ein mit Schwefel vernetztes Copolymer von Styrol und einem konjugierten Dien, ausgewählt unter Butadien, Isopren, Chloropren, carboxyliertem Butadien und carboxyliertem Isopren ist, wobei das vernetzte Copolymer 5 bis 50 Gew.-% Styrol enthält.

## Claims

**1.** Process of producing a bitumen/polymer component consisting of a hydrocarbon matrix, in which an elastomer cross-linked by sulphur is distributed in a homogeneous manner and in a quantity such as to represent from 5% to 20% by weight of the bitumen/polymer component, and having a PFEIFFER index (PF) greater than 5, the said index being defined by the equations

$$PF= \frac{20\text{-}500A}{1+50A} \text{ and } A = \frac{\log_{10}800\text{-}\log_{10}pen}{RBT\text{-}25},$$

in which the symbols "pen" and "RBT" indicate, respectively, the penetration determined according to French Standard T 66004 and the ring and ball softening point determined according to French Standard T 66008, the method being of the type in which a hydrocarbon fraction is placed in contact, between 100°C and 230°C and with stirring, with from 5% to 25% by weight, relative to the hydrocarbon fraction , of an elastomer which can be cross-linked by sulphur, in the presence of a quantity of a sulphur-donor coupling agent such as to provide from 0.5% to 10% by weight of sulphur relative to the elastomer, and being characterized in that a hydrocarbon fraction having a kinematic viscosity at 100°C of between 0.5x10-4 $m^2/s$ and $3x10^{-4}$ $m^2/s$ is used.

**2.** Process according to Claim 1, characterized in that the hydrocarbon fraction is placed in contact with the elastomer which can be cross-linked by sulphur, in the presence of the sulphur-donor coupling agent, at a temperature of between 120°C and 190°C.

**3.** Process according to Claim 1 or Claim 2, characterized in that the hydrocarbon fraction has a kinematic viscosity at 100°C of from $1x10^{-4}$ $m^2/s$ to $2x10^{-4}$ $m^2/s$.

**4.** Process according to any one of Claims 1 to 3, characterized in that the elastomer which can be cross-linked by sulphur is a copolymer of styrene and a conjugated diene selected from butadiene, isoprene, chloroprene, carboxylated butadiene and carboxylated isoprene.

**5.** Process according to Claim 4, characterized in that the copolymer of styrene and a conjugated diene has an average viscosimetric molecular weight of between 10000 and 600000.

**6.** Process according to Claim 5, characterized in that the said average viscosimetric molecular weight is between 30000 and 400000.

**7.** Process according to any one of Claims 4 to 6, characterized in that the copolymer of styrene and a conjugated diene includes from 5% to 50% by weight of styrene.

**8.** Process according to any one of Claims 1 to 7, characterized in that the sulphur-donor coupling agent consists of a product selected from elemental sulphur, hydrocarbyl polysulphides, sulphur-donor vulcanisation accelerators, and mixtures of these products with one another and/or with non-sulphur-donor vulcanisation accelerators.

**9.** Process according to any one of Claims 1 to 8, characterized in that a quantity of sulphur-donor coupling agent such as to provide from 1% to 8% by weight of sulphur, relative to the elastomer which can be cross-linked by

sulphur, is used.

**10.** Process according to any one of Claims 1 to 9, characterized in that the selected quantity of elastomer which can be cross-linked by sulphur is first mixed with the hydrocarbon fraction , with stirring, at a temperature of between 100°C and 230°, for a period of from 1 hour to 5 hours, to produce a homogeneous mixture, the sulphur-donor coupling agent then being incorporated in the said mixture and stirring of the whole being maintained at a temperature of between 100°C and 230°C, which may or may not be the same as the temperature for the mixing of the elastomer with the hydrocarbon fraction , for a period of between 30 minutes and 5 hours.

**11.** Use of a bitumen/polymer component according to any one of Claims 1 to 10 for the production of bitumen/ polymer compositions with low thermal sensitivity which are constituted, by weight, by from 20% to 100% of the bitumen/ polymer component and from 80% to 0% of a bitumen having a penetration of between 10 and 100, and which can be used, directly or after emulsification in water, for the production of road surfacings, for the production of mixes applied hot or cold, or for the production of sealing coatings.

**12.** Use according to Claim 11, characterized in that the bitumen associated with the bitumen/polymer component has a penetration of between 20 and 60.

**13.** Use of a bitumen/polymer component according to any one of Claims 1 to 10 for the production of a bitumen/ polymer composition which consists of a bituminous matrix in which an elastomer cross-linked by sulphur is distributed in a homogeneous manner in a quantity representing from 0.5 % to 15% by weight of the composition, and which has a penetration, determined according to French Standard T 66004, of between 80 and 400, a ring and ball softening point, determined according to French Standard T66008, greater than 55°C, and a PFEIFFER index greater than 5, by mixing of the said bitumen/polymer component having a content of cross-linked elastomer greater than that of the bitumen/polymer composition to be produced with a suitable quantity of bitumen having a penetration of between 10 and 100, operating at between 100°C and 230°C and with stirring, the said bitumen/ polymer composition being usable, directly or after emulsification in water, for the production of road surfacings, of mixes applied hot or cold, or of sealing coatings.

**14.** Use according to Claim 13, characterized in that the quantity of bitumen having a penetration of between 10 and 100 which is mixed with the bitumen/polymer component to form the bitumen/polymer composition is such that the said bitumen/polymer composition includes from 0.5% to 7% by weight of elastomer cross-linked by sulphur.

**15.** Use according to Claim 13 or Claim 14, characterized in that the bitumen mixed with the bitumen/polymer component has a penetration of between 20 and 60.

**16.** Use according to any one of Claims 13 to 15, characterized in that the bitumen/polymer composition has a PFEIFFER index of at least 7.

**17.** Use according to any one of Claims 13 to 16, characterized in that the bitumen/polymer composition has a ring and ball softening point of between 60°C and 120°C.

**18.** Use according to any one of Claims 13 to 17, characterized in that the bitumen/polymer composition has a FRAASS point, determined according to standard IP 80/53 of less than -20°C.

**19.** Use according to any one of Claims 13 to 18, characterized in that the bitumen/polymer composition has a stress at 900% elongation, determined by tensile tests carried out according to French Standard T 46002 with a speed of 500 mm/minute, of between 0.25 bars and 3 bars at 20°C and between 2 bars and 20 bars at 5°C.

**20.** Use according to any one of Claims 13 to 19, characterized in that the cross-linked elastomer is a copolymer, cross-linked by sulphur, of styrene and a conjugated diene selected from butadiene, isoprene, chloroprene, carboxylated butadiene, carboxylated isoprene, the said cross-linked copolymer including from 5% to 50% by weight of styrene.